# EUROPÄISCHE PATENTSCHRIFT

(11) **EP 0 891 601 B1**
(45) Veröffentlichungstag und Bekanntmachung des Hinweises auf die Patenterteilung: **13.10.1999**
(21) Anmeldenummer: 97916323.5
(22) Anmeldetag: 04.03.1997
(51) Int. Cl.: G06K 19/073

(54) **CHIPKARTE**
SMART CARD
CARTE A PUCE

(30) Priorität: 14.03.1996 DE 19610070
(43) Veröffentlichungstag der Anmeldung: 20.01.1999
(73) Patentinhaber: SIEMENS AKTIENGESELLSCHAFT, 80333 München (DE)
(72) Erfinder: SEDLAK, Holger, D-81541 München (DE); OBERLÄNDER, Klaus, D-86157 Augsburg (DE)
(86) Internationale Anmeldenummer: DE9700407
(87) Internationale Veröffentlichungsnummer: WO9734254

(56) Entgegenhaltungen:
- EP-A- 0 481 881
- DE-A- 4 328 753
- FR-A- 2 606 199
- NL-A- 8 903 111

## Beschreibung

Die Erfindung bezieht sich auf eine Chipkarte mit einem Kartenkörper und einem innerhalb des Kartenkörpers untergebrachten Halbleiterchip, auf welchem eine Steuerschaltung und eine mit der Steuerschaltung elektrisch gekoppelte Halbleiterspeichereinrichtung integriert ausgebildet ist, welche Steuerschaltung mit einer von einer Spannungsversorgungsschaltung erzeugten Versorgungsspannung und einem von einer separat von der Steuerschaltung angeordneten Taktversorgungsschaltung erzeugten Takt versorgt ist, wobei die Versorgungsspannung einen innerhalb vorbestimmter Betriebsspannungsgrenzen liegenden Betriebsspannungswert und der Versorgungstakt einen innerhalb vorbestimmter Betriebstaktgrenzen liegenden Betriebstaktwert besitzt.

Die Anwendungsmöglichkeiten von in der Regel im Scheckkartenformat ausgebildeten Chipkarten sind aufgrund einer hohen funktionalen Flexibilität äußerst vielseitig geworden und nehmen mit der steigenden Rechenleistung und Speicherkapazität der verfügbaren integrierten Schaltungen weiterhin zu. Neben den derzeit typischen Anwendungsfeldern solcher Chipkarten in der Form von Krankenversichertenkarten, Gleitzeiterfassungskarten, Telefonkarten ergeben sich zukünftig insbesondere Anwendungen im elektronischen Zahlungsverkehr, bei der Zugriffskontrolle auf Rechner, bei geschützten Datenspeichern und dergleichen. Beim Einsatz von Mikrocontrollern auf Chipkarten müssen in den meisten Fällen sehr hohe Sicherheitsanforderungen eingehalten werden, um einen unbefugten Zugriff auf vertrauliche Daten des Chipkarteninhabers oder eine Manipulation von Geldbeträgen wirksam zu verhindern. In den bisher bekannten Chipkarten werden daher Schutzelemente eingebaut, die hinsichtlich der Funktionsweise in passive und aktive Schutzmechanismen unterteilt werden können, und welche beispielsweise in dem Handbuch mit dem Titel "Chipkarten", Carl Hanser Verlag, 1995, Seiten 208 - 213 beschrieben sind.

Passive Schutzmechanismen basieren im wesentlichen direkt auf der Technologie der Halbleiterherstellung. Beispielsweise besitzen zur Überprüfung des Chips während der Halbleiterfertigung und zur Ausführung der internen Testprogramme sämtliche Mikrocontroller einen sogenannten Testmodus, bei dem die Halbleiterschaltungen noch auf dem Wafer oder im Modul beim Hersteller geprüft werden können. Dieser Testmodus erlaubt Zugriffsarten auf den Speicher, die später strikt verboten sind, so daß die Umschaltung vom Testmodus in den Benutzermodus irreversibel ausgestaltet sein muß. Dies wird in der Regel mit Polysilizium-Sicherungen auf dem Chip bewerkstelligt. Darüber hinaus ist es bekannt, die internen Busse auf dem Chip, die den Prozessor mit drei verschiedenen Speichertypen ROM, EEPROM und RAM verbinden, somit nicht nach außen geführt und danach auch mit sehr aufwendigen Verfahren nicht kontaktierbar sind, über verschlüsselte Anordnungen der einzelnen Busleitungen in einer wirren und mehrfach gegeneinander vertauschten Lage anzuordnen. Damit besteht keine Möglichkeit für einen unbefugten Angreifer, den Adress-, Daten- oder Steuerbus des Mikrocontrollers abzuhören oder zu beeinflussen und dadurch Speicherinhalte auszulesen. Weiterhin kann durch Unterbringung der Halbleiterspeicher nicht in den obersten und damit am leichtesten zugänglichen Schichten, sondern in den unteren Siliziumschichten verhindert bzw. erschwert werden, den Inhalt eines Festwertspeichers mit einem Lichtmikroskop Bit für Bit auszulesen. Eine weitere Gefahr stellt die Analyse von elektrischen Potentialen auf dem Chip während des Betriebes dar. Bei einer genügend hohen Abtastfrequenz besteht die Möglichkeit, Ladungspotentiale, d.h. Spannungen, auf sehr kleinen Kristallbereichen zu messen und auf diese Weise Rückschlüsse auf Dateninhalte des Halbleiterspeichers vom wahlfreien Zugriffstyp (RAM) während des Betriebes zu ziehen und damit Zugriff auf vertrauliche Daten des Chipkarteninhabers zu erhalten. Dies kann in gewisser Weise durch eine zusätzliche Metallisierungsschicht über den entsprechenden Speicherzellen verhindert werden. Wird diese Metallschicht beispielsweise auf chemischem Weg entfernt, ist der Chip nicht mehr funktionsfähig, da die Metallisierungsschicht als elektrische Spannungszuführung für eine ordnungsgemäße Funktion des Chips benötigt wird.

Weiterhin sind aktive Schutzmechanismen bei Chipkarten bekannt, die einen unbefugten Zugriff auf Dateninhalte verhindern sollen. Beispielsweise kann eine Sensorschaltung vorgesehen sein, die über eine Widerstands- oder Kapazitätsmessung feststellt, ob die auf dem Siliziumchip zur Verhinderung einer Oxidation auf der Chipoberfläche aufgetragene Passivierungsschicht noch vorhanden ist, welche bei der Vornahme von Manipulationen auf dem Chip entfernt werden muß. Ist die Passivierungsschicht nicht mehr vorhanden oder beschädigt, wird entweder ein Interrupt in der Chipsoftware ausgelöst oder der gesamte Chip von der Hardware abgeschaltet, so daß alle dynamischen Analysen zuverlässig verhindert werden. Weiterhin bekannt ist es, auf dem Chipkarten-Mikrocontroller eine Spannungsüberwachungsschaltung vorzusehen, welche für ein definiertes Abschalten des Bausteins sorgt, wenn die oberen oder unteren Grenzen der Betriebsspannung über- bzw. unterschritten werden. Damit erhält die Software die Sicherheit, daß ein Betrieb in den Grenzbereichen, in denen der Chip nicht mehr voll funktionsfähig ist, unmöglich ist. Ein weiterer bekannter Sensor, der zum Teil auf der Spannungsdetektion aufbaut, stellt die sogenannte Power-On-Erkennung dar. Diese ebenfalls in dem Chip vorhandene Detektion eines Power-On unabhängig vom Resetsignal sorgt dafür, daß der Chip beim Anschalten immer in einem definierten Bereich gesetzt wird. Weiterhin ist es bekannt, auf dem Chip eine Funktionsbaugruppe zur Unterfrequenzdetektion integriert auszubilden. Diese verhindert, daß der angelegte Takt in unzulässiger Weise erniedrigt werden kann. Die Taktversorgung der Chipkarte läuft in der Regel extern, so daß die interne Rechengeschwindigkeit völlig von außen bestimmt wird. Damit bestünde theoretisch die Möglichkeit, von außen den Mikrocontroller im Einzelschrittbetrieb zu fahren. Dies würde zu unbefugten Analysemöglichkeiten vor allem in der Messung von Stromaufnahmen und elektrischen Potentialen auf dem Chip führen.

Eine Chipkarte nach dem Oberbegriff des Anspruchs 1 ist beispielsweise aus der DE-A-4 328 753 bekannt geworden. Zur Verhinderung eines unberechtigten Zugriffes auf den Geheimcode ist als Schutzmaßnahme ein Zähler vorgesehen, der die Anzahl unberechtigter Zugriffe auf den Geheimcode erfasst und bei Überschreiten eines Grenzwertes die Chipkarte völlig sperrt.

Aus der EP-A-0 481 881 ist eine Chipkarte mit einem EEPROM und einer CPU bekannt geworden, welchen Sicherheitsdetektoren zur Erfassung anormaler Betriebs- oder Umgebungszustände zugeordnet sind. Die Detektoren stehen in Verbindung mit einem Register RS, dessen Dateninhalt im Falle einer EINS einen Sprung zu einem Unterprogramm der CPU steuert, welches die CPU unterbricht.

Aus der NL-A-8 903 111 ist eine Prozessorchipkarte mit einem Festwertspeicher und mit Detektoren bekannt geworden, mit welchem die Prozessorchipkarte als Reaktion auf einen nicht durch die Prozessorchipkarte autorisierten Zugangsversuch zu dem Festwertspeicher unbrauchbar gemacht wird. Der Festwertspeicher stellt einen flüchtigen Speicher (SRAM) dar. Die Prozessorchipkarte besitzt einen Schalter mit einer ersten Position und einer zweiten Position, wobei die Detektoren bei der Detektion eines nicht autorisierten Zugangsversuches den Schalter von der ersten Position zu der zweiten Position schalten, um die Prozessorchipkarte unbrauchbar zu machen.

Allen bisher bekannt gewordenen Schutzmaßnahmen zur Verhinderung des unbefugten Zugriffs auf vertrauliche Dateninhalte bei Chipkarten ist gemeinsam, daß nach einer Auslösung der betreffenden Schutzmaßnahme die Chipkarte insgesamt nicht mehr funktionsfähig ist.

Der Erfindung liegt die Aufgabe zugrunde, eine aktive Schutzeinrichtung für eine Chipkarte der gattungsgemäßen Art zur Verfügung zu stellen bzw. dahingehend zu verbessern, daß die Gefahr eines unbefugten Zugriffes auf Dateninhalte von Speicherzellen des innerhalb der Chipkarte untergebrachten Halbleiterspeichers vom wahlfreien Zugriffstyp wirksam ausgeschlossen werden kann, gleichzeitig die vom unbefugten Zugriff nicht betroffenen Schaltungskomponenten der Chipkarte funktionsfähig bleiben.

Diese Aufgabe wird durch eine Chipkarte gemäß Anspruch 1 gelöst.

Erfindungsgemäß ist vorgesehen, daß der Steuerschaltung des innerhalb des Kartenkörpers untergebrachten Halbleiterchips eine Sensorschaltung zugeordnet ist, welche eine Abweichung des erlaubten Betriebszustandes der Steuerschaltung und/oder weiterer Schaltungskomponenten des Halbleiterchips erfaßt, und bei Vorliegen eines unerlaubten Betriebszustandes ein Auslösesignal erzeugt, welches einer der Sensorschaltung nachgeschalteten und der Halbleiterspeichereinrichtung zugeordneten Auslöseschaltung zugeführt ist, die als Reaktion auf das Auslösesignal eine wenigstens bereichsweise Löschung des Dateninhalts der Halbleiterspeichereinrichtung steuert. Die Erfindung besteht somit im wesentlichen darin, bei einer beliebigen Abweichung des erlaubten Betriebszustandes der in der Chipkarte untergebrachten Steuerschaltung und/oder weiterer Schaltungskomponenten selbsttätig eine sofortige Löschung von sicherheitsrelevanten oder personenbezogenen Dateninhalten zu steuern. Eine Abweichung vom erlaubten Betriebszustand der Steuerschaltung wird beispielsweise bei einem unbefugten Zugriff oder eine unbefugte Manipulation an Schaltungskomponenten der Chipkarte hervorgerufen, beispielsweise bei dem Versuch, vertrauliche Daten durch unbefugte Eingriffe auszulesen. Durch die Abweichung vom erlaubten Betriebszustand wird ein solcher Manipulationsversuch automatisch erkannt und zur selbsttätigen Löschung insbesondere sämtlicher vertraulicher Dateninhalte ausgelöst. Solche Dateninhalte sind beispielsweise in einem mit der Steuerschaltung elektrisch gekoppelten Halbleiterspeicher vom wahlfreien Zugriffstyp, darüber hinaus jedoch auch beispielsweise in einem der Steuerschaltung zugeordneten Speicherregister, beispielsweise einem sogenannten Spezialfunktionsregister, oder in einem Akkumulator zeitweise abgespeichert. Das von der Sensorschaltung bei Abweichung vom erlaubten Betriebszustand erzeugte Auslösesignal steuert somit nicht nur das Löschen der relevanten Dateninhalte vom Halbleiterspeicher vom wahlfreien Zugriffstyp (RAM), sondern auch das Löschen von Dateninhalten von allen weiteren Speicher- oder Registervorrichtungen, in denen wenigstens zeitweise solche Daten abgelegt sind, aus denen Rückschlüsse auf vertrauliche Informationen abgeleitet werden können.

Ein wesentlicher Vorteil der Erfindung liegt darin, daß im Falle des Auftretens eines unerlaubten Betriebszustandes die Funktionsfähigkeit der von dem Manipulationsversuch nicht betroffenen Schaltungskomponenten, insbesondere die Steuerschaltung selbst, unverändert in Betrieb bleiben. Auf diese Weise können nach Auftreten eines Manipulationsversuches noch wirksam Datensignale verarbeitet werden. Beispielsweise kann eine Übertragung von Daten an ein mit der Chipkarte in Verbindung stehendes Terminal erfolgen und eine entsprechende Sperrung der Chipkarte unter Angabe der zugehörenden Personendaten veranlaßt werden.

Bei einer besonders einfach zu realisierenden Anordnung kann vorgesehen sein, daß nach Erfassung des unerlaubten Betriebszustandes selbsttätig eine vollständige Löschung von Dateninhalten erfolgt. Dies kann vorzugsweise durch Ausgabe eines Reset-Signales an alle betroffenen Speicher- oder Register der Halbleiterspeichereinrichtung bewerkstelligt werden.

Bei einer bevorzugten Ausführung der Erfindung ist vorgesehen, daß die Sensorschaltung der Taktversorgung und/oder der Spannungsversorgung der Steuerschaltung zugeordnet ist und eine Abweichung der Versorgungsspannung von der Betriebsspannung und/oder eine Abweichung des Versorgungstaktes von dem Betriebstakt erfaßt und bei Vorliegen einer Abweichung der Betriebsspannung und/oder des Betriebstaktes ein Auslösesignal erzeugt, welches einer der Sensorschaltung nachgeschalteten und der Halbleiterspeichereinrichtung zugeordneten Auslöseschaltung zugeführt ist, welche als Reaktion auf das Auslösesignal eine wenigstens bereichsweise Löschung des Dateninhalts der Halbleiterspeichereinrichtung steuert.

Insbesondere der in der Chipkarte vorgesehene und zur zeitweisen Speicherung personenbezogener Daten dienende Halbleiterspeicher vom wahlfreien Zugriffstyp (RAM) stellt eine gewisse Schwachstelle des auf dem Halbleiterchip ausgebildeten Mikrocontrollers dar, da deren Speicherzellen vertrauliche Dateninhalte in geordneter Form enthalten, die bei einem unbefugten Zugriff durch relativ einfach durchzuführende Maßnahmen ausgelesen werden können. Durch die Erfindung wird bei einem unbefugten Ausleseversuch der Dateninhalte über Betriebsspannungs- bzw. Frequenzmanipulationen selbsttätig eine sofortige Löschung der Speicherzellen hervorgerufen. Durch diese Maßnahme wird ein unberechtigtes Auslesen des Halbleiterspeichers, in welchem während dem Betriebszustand zeitweise vertrauliche Dateninhalte bzw. Schlüsseldaten abgelegt sind, zumindest erheblich erschwert. Es ist somit insbesondere nicht mehr möglich, den Halbleiterchip in einen unerlaubten Betriebszustand zu bringen, um anschließend in aller Ruhe "quasistatisch" die Dateninhalte, welche der Halbleiterspeicher hält, solange die Betriebsspannung noch eingeschaltet ist, auszulesen.

Dem Prinzip der Erfindung folgend kann vorgesehen sein, daß die Sensorschaltung eine Spannungsdetektorschaltung aufweist, welche ein Über- bzw. Unterschreiten der Versorgungsspannung von den vorbestimmten oberen bzw. unteren Grenzwerten der Betriebsspannung erfaßt. Des weiteren kann vorgesehen sein, daß die Sensorschaltung eine Frequenzdetektorschaltung aufweist, die ein Über- bzw. Unterschreiten des Versorgungstaktes von den oberen bzw. unteren Grenzwerten des Betriebstaktes erfaßt.

Bei einer bevorzugten Ausführung der Erfindung kann vorgesehen sein, daß die der Sensorschaltung nachgeschaltete Auslöseschaltung zur Löschung des Dateninhalts von sämtlichen Speicherzellen des Halbleiterspeichers vom wahlfreien Zugriffstyp ein Reset-Signal an den Halbleiterspeicher ausgibt. Hierbei kann insbesondere vorgesehen sein, daß die Steuerung der wenigstens bereichsweisen Löschung des Dateninhalts von Speicherzellen des Halbleiterspeichers vom wahlfreien Zugriffstyp vermittels der der Sensorschaltung nachgeschalteten Auslöseschaltung unabhängig von der der Steuerschaltung zugeordneten Taktversorgung erfolgt. Hierbei wird in allen vier denkbaren Fällen, in denen die Sensorschaltung das Auslösesignal erzeugt, eine Löschung des gesamten Halbleiterspeichers vom wahlfreien Zugriffstyp veranlaßt, die unabhängig vom Anliegen des Taktes an die Steuerschaltung asynchron erfolgt, um sicherzustellen, daß die Sensorschaltung und Auslöseschaltung auch beim totalen Abschalten des Taktes ordnungsgemäß funktioniert.

Weitere Vorteile, Merkmale und Zweckmäßigkeiten der Erfindung ergeben sich aus der nachfolgenden Beschreibung eines Ausführungsbeispieles anhand der Zeichnung. Es zeigt:
- Figur 1: eine schematische Draufsicht einer Chipkarte; und
- Figur 2: eine schematische Darstellung der auf dem im Kartenkörper untergebrachten Halbleiterchip vorgesehenen elektronischen Schaltungskomponenten.

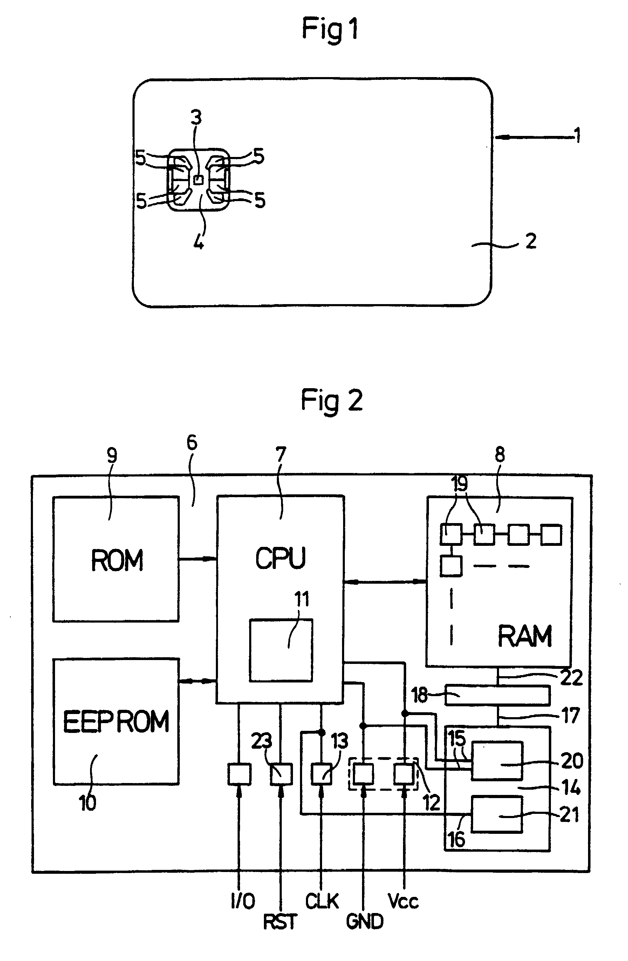

Figur 1 zeigt eine Chipkarte 1 mit einem Kartenkörper 2 und einem innerhalb des Kartenkörpers 2 untergebrachten Halbleiterchip 3, der als Bestandteil eines vorgefertigten Chipmoduls 4 gefertigt ist, auf deren Oberfläche metallische Kontaktelemente 5 für die Energieversorgung und die Datenübertragung nach außen angeordnet sind. Anstelle einer kontaktbehafteten Chipkarte kann die erfindungsgemäße Chipkarte auch eine kontaktlose Karte darstellen.

In Figur 2 sind die wichtigsten funktionellen Schaltungskomponenten der auf dem Halbleiterchip 3 ausgebildeten Mikrocontrollerschaltung 6, die den zentralen Bestandteil der Chipkarte 1 darstellt, gezeigt. Dargestellt ist eine Steuerschaltung bzw. Mikroprozessorschaltung 7 und drei unterschiedliche Halbleiterspeicher, insbesondere ein Halbleiterspeicher vom wahlfreien Zugriffstyp (RAM) 8, ein Festwertspeicher (ROM) 9, sowie ein elektrisch programmierbarer und löschbarer Festwertspeicher (EEPROM) 10. Im ROM-Speicher 9 der Chipkarte 1 befinden sich die meisten Betriebssystemroutinen, sowie diverse Test- und Diagnosefunktionen. Diese Programme werden vom Halbleiterhersteller bei der Produktion des Halbleiterchips 3 eingebracht. Der gegenüber ROM und RAM technisch aufwendigere Speicher EEPROM 10 wird in der Chipkarte 1 für sämtliche Daten und Programme verwendet, die zu einem beliebigen Zeitpunkt einmal verändert oder gelöscht werden sollen. Der Funktionalität nach entspricht ein EEPROM der Festplatte eines Personalcomputers, da Daten auch ohne Stromzufuhr erhalten bleiben und sich bei Bedarf ändern lassen. Der RAM-Speicher 8 stellt den Speicher der Chipkarte 1 dar, in dem Daten während einer Sitzung beliebig oft gespeichert und geändert werden können. Hinsichtlich der Anzahl der möglichen Zugriffe unterliegt der RAM-Speicher 8 somit keinen Einschränkungen wie etwa der EEPROM-Speicher 10. Zur Datenerhaltung benötigt der RAM-Speicher 8 eine Spannungsversorgung. Ist die Betriebsspannung nicht mehr vorhanden, oder fällt sie kurzzeitig aus, ist der Inhalt des RAM-Speichers 8 nicht mehr definiert. Aufgebaut ist der RAM-Speicher 8 aus mehreren Transistoren, die so geschaltet sind, daß sie als bistabile Kippschaltung funktionieren. Der Schaltungszustand repräsentiert hierbei den Speicherinhalt eines Bits im RAM-Speicher 8. Der in der Chipkarte 1 verwendete RAM-Speicher 8 ist vom statischen Typ, d.h. der Speicherinhalt muß nicht periodisch aufgefrischt werden. Damit ist der RAM-Speicher 8 auch unabhängig von einem äußeren Takt, im Gegensatz zu einem dynamischen RAM-Speicher. Die Verwendung eines statischen RAM-Speichers 8 ist im übrigen auch deshalb wichtig, weil es möglich sein muß, im sogenannten Schlafmodus (Sleep Mode) die Taktversorgung von Chipkarten anzuhalten, was bei dynamischen RAM-Speichern nicht möglich wäre.

Der in der Chipkarte 1 zum Einsatz kommende Mikroprozessor 7 stellt einen an sich bekannten Prozessortyp dar, dessen Befehlssatz sich beispielsweise an der Intel 8051-Architektur orientiert und teilweise durch weitere Befehle ergänzt sein kann. Zur Spannungsversorgung der Schaltungskomponenten der Mikrocontrollerschaltung 6 ist eine extern über die Anschlüsse GND (= Ground bzw. Masse) und Vcc (= Versorgungsspannung) der Kontakte 5 der Chipkarte 1 gespeiste Spannungsversorgungsschaltung 12 vorgesehen, die einen innerhalb vorbestimmter Betriebsspannungsgrenzen liegenden Betriebsspannungswert liefert, beispielsweise etwa 3 bis 5 V ± 10 %. Des weiteren ist eine schematisch durch den Anschluß Clk (Clock = Takt) dargestellte Taktversorgungsschaltung 13 vorgesehen, die den Mikroprozessor 7 mit dem für die zeitlich definierte Abfolge der Befehlsabarbeitung erforderlichen und die Rechengeschwindigkeit der Mikrocontrollerschaltung 6 bestimmenden Versorgungstakt liefert, der einen innerhalb vorbestimmter Betriebstaktgrenzen liegenden Betriebstaktwert besitzt, beispielsweise zwischen etwa 1 bis 5 Mhz, in zukünftigen Anwendungen etwa 7,5 Mhz, 10 Mhz. Gegenüber der Mikroprozessorschaltung 7 ist die Taktversorgung aufgrund der separat hiervon und schematisch dargestellten Taktversorgungsschaltung 13 vorgegeben, so daß die interne Rechengeschwindigkeit völlig von außen bestimmt wird. Damit besteht theoretisch die Möglichkeit, von außen die Mikrocontrollerschaltung 6 im Einzelschrittbetrieb zu fahren, was an sich zu unberechtigten Analysemöglichkeiten vor allem in der Messung von Stromaufnahmen und elektrischen Potentialen auf dem Halbleiterchip 3 führen könnte. Erfindungsgemäß ist eine der Taktversorgung und/oder der Spannungsversorgung der Steuerschaltung 7 zugeordnete Sensorschaltung 14 vorgesehen, welche eingangsseitig über Leitungen 15 und 16 den unmittelbar der Steuerschaltung 7 zugeordneten Versorgungstakt und/oder die Versorgungsspannung erfaßt und bei Vorliegen einer Abweichung von der Betriebsspannung und/oder vom Betriebstakt ein Auslösesignal erzeugt, welches über eine Leitung 17 einer der Sensorschaltung 14 nachgeschalteten und dem Halbleiterspeicher 8 zugeordneten Auslöseschaltung 18 zugeführt ist, welche wiederum als Reaktion auf das Auslösesignal eine wenigstens bereichsweise Löschung des Dateninhalts von Speicherzellen 19 des Halbleiterspeichers 8 steuert. Hierbei umfaßt die Sensorschaltung 14 zum einen eine Spannungsdetektorschaltung 20, welche ein Über- bzw. Unterschreiten der Versorgungsspannung von den vorbestimmten oberen bzw. und unteren Grenzwerten der Betriebsspannung erfaßt, und zum anderen eine Frequenzdetektorschaltung 21, welche ein Über- bzw. Unterschreiten des Versorgungstaktes von den oberen bzw. unteren Grenzwerten des Betriebstaktes erfaßt. Vorzugsweise erzeugt die über eine Leitung 22 mit dem Halbleiterspeicher 8 verbundene Auslöseschaltung 18 als Reaktion auf das von der Sensorschaltung 14 gelieferte Auslösesignal ein Reset-Signal, aufgrund dessen die Dateninhalte von sämtlichen Speicherzellen 19 des Halbleiterspeichers 8 gelöscht werden. Dieses Reset-Signal wird unabhängig von einem über den Anschluß 23 der Kontakte 5 zugeführten externen RST-Signales erzeugt. Gleichzeitig mit der Löschung von Dateninhalten der Speicherzellen des Halbleiterspeichers vom wahlfreien Zugriffstyp können erfindungsgemäß auch Dateninhalte eines der Steuerschaltung zugeordneten, in Fig.2 schematisch angedeuteten Registers oder Akkumulators 11 gelöscht werden.

## Patentansprüche

1. Chipkarte mit einem Kartenkörper (2) und einem innerhalb des Kartenkörpers (2) untergebrachten Halbleiterchip (3), auf welchem eine Steuerschaltung (7) und eine mit der Steuerschaltung (7) elektrisch gekoppelte Halbleiterspeichereinrichtung integriert ausgebildet ist, welche Steuerschaltung (7) mit einer von einer Spannungsversorgungsschaltung (12) erzeugten Versorgungsspannung und einem von einer separat von der Steuerschaltung (7) angeordneten Taktversorgungsschaltung (13) erzeugten Takt versorgt ist, wobei der Steuerschaltung (7) eine Sensorschaltung (14) zugeordnet ist, welche eine Abweichung des erlaubten Betriebszustandes der Steuerschaltung (7) und/oder weiterer Schaltungskomponenten des Halbleiterchips erfaßt,
**dadurch gekennzeichnet**,
daß eine der Sensorschaltung (14) nachgeschaltete Auslöseschaltung (18) vorgesehen ist, die bei Vorliegen eines unerlaubten Betriebszustandes der Steuerschaltung (7) und/oder einer weiteren Schaltungskomponente ein Reset-Signal erzeugt und unabhängig von der Taktversorgung der Steuerschaltung (7) das Reset-Signal zur Löschung des Dateninhalts von sämtlichen Speicherzellen der Halbleiterspeichereinrichtung (8) an die Halbleiterspeichereinrichtung (8) ausgibt.

2. Chipkarte nach Anspruch 1, dadurch gekennzeichnet, daß die Sensorschaltung (14) der Taktversorgung und/oder der Spannungsversorgung der Steuerschaltung (7) zugeordnet ist und eine Abweichung der Versorgungsspannung von der Betriebsspannung und/oder eine Abweichung des Versorgungstaktes von dem Betriebstakt erfaßt und bei Vorliegen einer Abweichung der Betriebsspannung und/oder des Betriebstaktes das Reset-Signal erzeugt.

3. Chipkarte nach Anspruch 1 oder 2, dadurch gekennzeichnet, daß die Sensorschaltung (14) eine Spannungsdetektorschaltung (20) aufweist, welche ein Ober- bzw. Unterschreiten der Versorgungsspannung von den vorbestimmten oberen bzw. unteren Grenzwerten der Betriebsspannung erfaßt.

4. Chipkarte nach Anspruch 1 bis 3, dadurch gekennzeichnet, daß die Sensorschaltung (14) eine Frequenzdetektorschaltung (21) aufweist, die ein Ober- bzw. Unterschreiten des Versorgungstaktes von den oberen bzw. unteren Grenzwerten des Betriebstaktes erfaßt.

5. Chipkarte nach Anspruch 1 bis 4, dadurch gekennzeichnet, daß die Steuerschaltung (7) eine Mikroprozessorschaltung einer auf dem Halbleiterchip (3) integriert ausgebildeten Mikrocontrollerschaltung (6) darstellt, die neben einem Halbleiterspeicher vom wahlfreien Zugriffstyp (8) als weitere Funktionseinheiten insbesondere einen Festwerthalbleiterspeicher (9) und/oder einen elektrisch löschbaren Halbleiterspeicher (10) umfaßt.

6. Chipkarte nach Anspruch 1 bis 5, dadurch gekennzeichnet, daß gleichzeitig mit der Löschung von Dateninhalten der Speicherzellen des Halbleiterspeichers vom wahlfreien Zugriffstyp auch Dateninhalte eines der Steuerschaltung zugeordneten Registers oder Akkumulators gelöscht werden.

## Claims

1. Chip card having a card body (2) and a semiconductor chip (3) which is accommodated within the card body (2) and on which a control circuit (7) and a semiconductor memory device, which is electrically coupled to the control circuit (7), are constructed in an integrated manner, which control circuit (7) is supplied with a supply voltage generated by a voltage supply circuit (12) and with a clock generated by a clock supply circuit (13), which is arranged separately from the control circuit (7), the control circuit (7) being assigned a sensor circuit (14) which detects a deviation of the allowed operating state of the control circuit (7) and/or of further circuit components of the semiconductor chip, characterized in that a triggering circuit (18), which is connected downstream of the sensor circuit (14), is provided, which triggering circuit, if a disallowed operating state of the control circuit (7) and/or of a further circuit component is present, generates a reset signal and, for the purpose of erasing the data contact from all the memory cells of the semiconductor memory device (8), outputs the reset signal to the semiconductor memory device (8) independently of the clock supply of the control circuit (7).

2. Chip card according to Claim 1, characterized in that the sensor circuit (14) is assigned to the clock supply and/or the voltage supply of the control circuit (7) and detects a deviation of the supply voltage from the operating voltage and/or a deviation of the supply clock from the operating clock and, if a deviation of the operating voltage and/or of the operating clock is present, generates the reset signal.

3. Chip card according to Claim 1 or 2, characterized in that the sensor circuit (14) has a voltage detector circuit (20) which detects when the supply voltage exceeds or falls below the predetermined upper or lower limit values, respectively, of the operating voltage.

4. Chip card according to Claims 1 to 3, characterized in that the sensor circuit (14) has a frequency detector circuit (21) which detects when the supply clock exceeds or falls below the predetermined upper or lower limit values, respectively, of the operating clock.

5. Chip card according to Claims 1 to 4, characterized in that the control circuit (7) constitutes a microprocessor circuit of a microcontroller circuit (6) which is constructed on the semiconductor chip (3) in an integrated manner and, in addition to a semiconductor memory of the random access type (8), comprises, as further functional units, in particular a read-only semiconductor memory (9) and/or an electrically erasable semiconductor memory (10).

6. Chip card according to Claims 1 to 5, characterized in that, at the same time as the erasure of data contents of the memory cells of the semiconductor chip of the random access type, data contents of a register or accumulator assigned to the control circuit are also erased.

## Revendications

1. Carte à puce, comportant un corps (2) de carte et une puce (3) à semi-conducteurs, qui est montée à l'intérieur du corps (2) de carte et sur laquelle sont réalisés un circuit (7) de commande et un dispositif de mémorisation à semi-conducteurs qui est couplé électroniquement au circuit (7) de commande, ce circuit (7) de commande étant alimenté en une tension d'alimentation produite par un circuit (12) d'alimentation en tension et en une cadence produite par un circuit (13) d'alimentation en cadence monté séparément du circuit (7) de commande, un circuit (14) détecteur, qui détecte un écart de l'état de fonctionnement permis du circuit (7) de commande et/ou de composants supplémentaires de circuit de la puce à semi-conducteurs, étant associé au circuit (7) de commande,
caractérisée en ce que
il est prévu un circuit (18) de déclenchement, qui est monté en aval du circuit (14) détecteur, et qui, en présence d'un état de fonctionnement non autorisé du circuit (7) de commande et/ou d'un autre composant de circuit, produit un signal de remise à l'état initial et, indépendamment de l'alimentation en cadence du circuit (7) de commande, émet à destination du dispositif (8) de mémorisation à semi-conducteurs, le signal de remise à l'état initial pour effacer le contenu de données de toutes les cellules de mémoire du dispositif de mémorisation à semi-conducteurs.

2. Carte à puce suivant la revendication 1, caractérisée en ce que le circuit (14) détecteur est associé à l'alimentation en cadence et/ou à l'alimentation en tension du circuit (7) de commande et détecte un écart de la tension d'alimentation par rapport à la tension de service et/ou un écart de la cadence d'alimentation par rapport à la cadence de service et, en présence d'un écart de la tension de service et/ou de la cadence de fonctionnement, produit le signal de remise à l'état initial.

3. Carte à puce suivant la revendication 1 ou 2, caractérisée en ce que le circuit (14) détecteur comporte un circuit (20) de détection de tension, qui détecte un passage de la tension d'alimentation au-dessus et au-dessous des valeurs limites supérieure et inférieure de la tension de fonctionnement.

4. Carte à puce suivant la revendication 1 à 3, caractérisée en ce que le circuit (14) détecteur comprend un circuit de détection de fréquence, qui détecte un passage de la cadence d'alimentation au-dessus et au-dessous des valeurs limites supérieure et inférieure de la cadence de fonctionnement.

5. Carte à puce suivant la revendication 1 à 4, caractérisée en ce que le circuit (7) de commande représente un circuit à microprocesseur d'un circuit (6) de micro-contrôleur qui est réalisé de manière intégrée sur la puce (3) à semi-conducteurs et qui comprend, outre une mémoire à semi-conducteurs du type (8) à accès sélectif, comme unité fonctionnelle supplémentaire, notamment une mémoire (9) à semi-conducteurs morte et/ou une mémoire (10) à semi-conducteurs effaçable électroniquement.

6. Carte à puce suivant la revendication 1 à 5, caractérisée en ce que aussi des contenus de données d'un registre ou d'un accumulateur associé au circuit de commande sont effacés en même temps que des contenus de données des cellules de mémoire de la mémoire à semi-conducteurs du type à accès sélectif sont effacés.
